# EUROPÄISCHE PATENTSCHRIFT

(11) **EP 0 480 170 B1**
(45) Veröffentlichungstag und Bekanntmachung des Hinweises auf die Patenterteilung: **13.12.1995**
(21) Anmeldenummer: 91114795.7
(22) Anmeldetag: 03.09.1991
(51) Int. Cl.: G01L 9/00, G01L 19/04, G01L 9/12

(54) **Sensor für ein Kapazitäts-Manometer**
Sensor for a capacitive manometer
Capteur pour un manomètre capacitif

(30) Priorität: 08.10.1990 DE 4031791
(43) Veröffentlichungstag der Anmeldung: 15.04.1992
(73) Patentinhaber: Balzers und Leybold Deutschland Holding Aktiengesellschaft, 63450 Hanau (DE)
(72) Erfinder: Voss, Günter, Dr., W-5203 Much (DE)
(74) Vertreter: Leineweber, Jürgen, Dipl.-Phys.

(56) Entgegenhaltungen:
- EP-A- 0 195 985
- EP-A- 0 373 536
- WO-A-90/11502
- DE-A- 4 004 275
- DE-C- 2 709 945
- US-A- 4 141 252

## Beschreibung

Die Erfindung bezieht sich auf einen Sensor für ein Kapazitäts-Manometer mit den Merkmalen des Oberbegriffs des Patentanspruchs 1.

Mit einem Sensor dieser Art ausgerüstete Kapazitäts-Manometer haben im allgemeinen gegenüber anderen Druckmeßgeräten den Vorteil, daß sie empfindlicher und genauer sind und daß sie - je nach Stabilität der Membran und/oder dem Referenzdruck im Inneren des Sensors - in nahezu allen Druckbereichen und Umgebungen eingesetzt werden können. Die Herstellung des Sensors ist jedoch aufwendig. Insbesondere ist die Kontaktierung der auf der Membran befindlichen Elektroden mit besonderen mechanischen Schwierigkeiten verbunden, so daß die an sich guten Meßeigenschaften dadurch beeinträchtigt sind.

Bei einer aus der DE-PS-27 09 945 bekannten Ausführungsform sind die Anschlußleitungen in der Ebene der Elektroden nach außen geführt. Diese Lösung setzt voraus, daß die Anschlußleitungen den Randbereich des Sensors durchsetzen, in dem die beiden Scheiben - beispielsweise mit einer Glasfritte - druck- und/oder vakuumdicht miteinander verbunden sein müssen. Wegen der Durchführung der Anschlußleitungen ist eine sorgfältige Abdichtung der Randbereiche nicht immer gewährleistet.

Ein Sensor mit den Merkmalen des Oberbegriffs des Patentanspruchs 1 ist aus der WO-A-90/11502 bekannt. Auch bei dieser Lösung ist die Elektrode der Membran nach außen hin kontaktiert. Dazu ist eine speziell gestaltete Zwischenschicht erforderlich, die aus mehreren isoliert voneinander angeordneten Teilen besteht. Die Herstellung einer solchen mehrteiligen Zwischenschicht ist aufwendig.

Der vorliegenden Erfindung liegt die Aufgabe zugrunde, einen Sensor der eingangs genannten Art zu schaffen, bei dem die mit der Kontaktierung der Sensorelektroden verbundenen Schwierigkeiten nicht mehr bestehen.

Erfindungsgemäß wird diese Aufgabe durch die kennzeichnenden Merkmale des Patentanspruchs 1 gelöst. Bei einem in dieser Weise ausgebildeten Sensor ist es nicht mehr erforderlich, die Membran mit elektrischen Kontakten auszurüsten. Die bisher damit verbundenen mechanischen Probleme und deren Auswirkungen auf die Eigenschaften des Sensors entfallen. Überraschenderweise hat sich herausgestellt, daß ein Sensor der erfindungsgemäßen Art außerdem noch wesentlich unempfindlicher gegen Störfelder (elektrisch, magnetisch) ist als Sensoren mit kontaktierten Membranelektroden. Offensichtlich wirken die Störfelder gleichmäßig auf alle Elektroden des erfindungsgemäßen Sensors, so daß sich die Kapazitäts-Werte insgesamt nicht ändern.

Weitere Vorteile und Einzelheiten der Erfindung sollen anhand von in den Figuren 1 bis 11 dargestellten Ausführungsbeispielen erläutert werden. Es zeigen
- Figuren 1 bis 4 ein Ausführungsbeispiel für einen Sensor der erfindungsgemäßen Art mit zwei Elektroden auf der Basisscheibe,
- Figuren 5 bis 8 ein Ausführungsbeispiel mit vier Elektroden auf der Basisscheibe und
- Figuren 9 bis 11 Elektrodengestaltungen für einen Sensor nach den Figuren 5 bis 8.

In allen Figuren sind der erfindungsgemäße Sensor mit 1, seine Basisscheibe mit 2 und seine Membran mit 3 bezeichnet. Basisscheibe und Membran bestehen aus elektrisch isolierendem Material, beispielsweise Kunststoff, Glas, Keramik usw.. In ihren peripheren Bereichen sind die Basisscheibe 2 und die Membran 3 miteinander verbunden, beispielsweise über eine Glasfritte 4 oder mittels einer Klebeverbindung. Dadurch wird eine Innenkammer 5 gebildet, in die die Bohrung 6 in der Basisscheibe 2 mündet. Mit Hilfe der Bohrung 6 erfolgt die Einstellung des Referenzdruckes in der Kammer 5. Nach der Einstellung des Referenzdruckes wird die Bohrung 6 verschlossen. Man kann sie auch mit einem Anschluß versehen und erhält einen Differenzdrucksensor. Soll der Sensor bei einem Vakuum-Meßgerät eingesetzt werden, dann wird der Innenraum 5 zunächst über die Bohrung 6 bzw. über ein an diese Bohrung 6 angeschlossenes Röhrchen evakuiert. Innerhalb der Bohrung 6 oder innerhalb des Röhrchens wird ein Gettermaterial untergebracht. Nach dem Verschließen der Bohrung 6 - beispielsweise durch Abschmelzen des angeschlossenen Röhrchens - sorgt das Gettermaterial ständig dafür, daß innerhalb der Kammer 5 ein extrem kleiner Druck herrscht.

Die dargestellten Ausführungsbeispiele haben insgesamt eine kreisförmige bzw. zylindrische Struktur. Die Achse ist mit 9 bezeichnet.

Die Figuren 2, 3, 6, 7, 9 und 10 zeigen auf die Innenseiten der Membran 2 bzw. der Basisscheibe 3 aufgebrachte metallische Elektroden, die die gewünschten Kondensatoren bilden. Diese Elektroden werden durch Bedampfen oder durch Siebdruck aufgebracht, haben beispielsweise eine Stärke von 50 » und bestehen z.B. aus Platin.

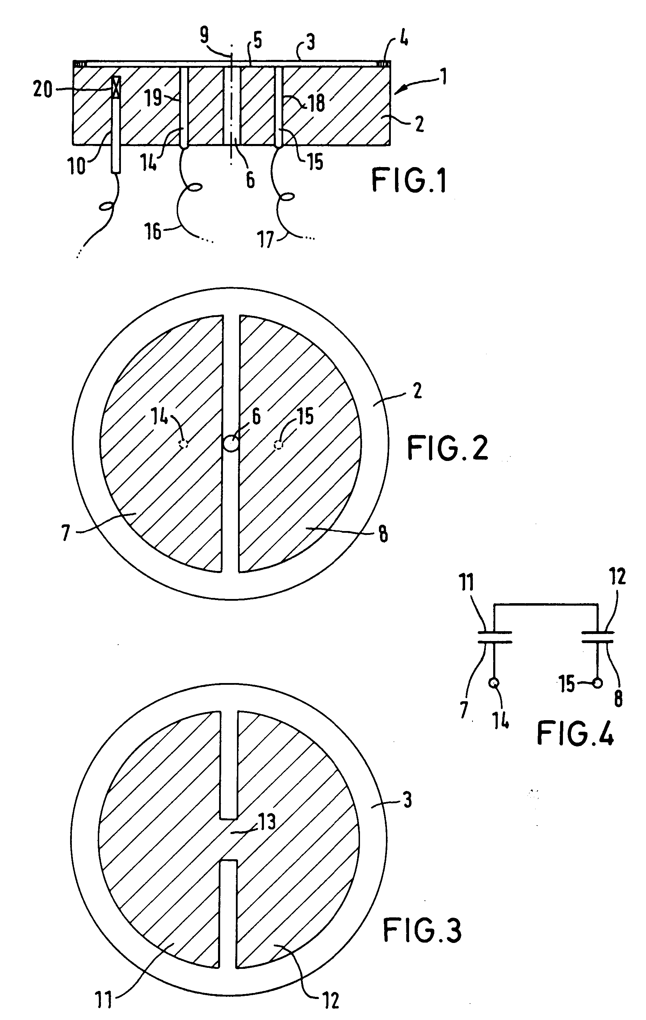

Figur 2 zeigt, daß beim Ausführungsbeispiel nach den Figuren 1 bis 4 zwei halbmondförmige Elektroden 7, 8 auf die Basisscheibe 2 aufgebracht sind. Die Membran 3 trägt entsprechende Elektroden 11, 12, die elektrisch über die Brücke 13 miteinander verbunden sind. Es besteht auch die Möglichkeit, die beiden Elektroden 11, 12 in ihrem gesamten angrenzenden Bereich miteinander zu verbinden, so daß nur ein kreisförmiger metallischer Schichtabschnitt auf der Membran 3 vorhanden ist.

Die Schichtabschnitte bzw. Elektroden 7, 8 und 11, 12 bilden zwei in Reihe geschaltete Kondensatoren, wie es in Figur 4 dargestellt ist. Bei dieser Ausführung ist es nicht erforderlich, die Membran 3 selbst mit Anschlußleitungen auszurüsten. Nur die Basis-Elektroden 7, 8 sind mit den Anschlüssen 14, 15 ausgerüstet, die mit zur nicht dargestellten Schaltung führenden Leitungen 16, 17 verbunden werden. In Figur 2 sind die Anschlüsse 14, 15 gestrichelt dargestellt.

Zur Bildung der Anschlüsse 14, 15 sind achsparallele Bohrungen 18, 19 vorgesehen. Diese werden zunächst mit einem Lot gefüllt. Danach wird diejenige Stirnseite der Scheibe 2 geläppt, auf die die Elektroden 7, 8 aufgebracht werden. Gleichzeitig mit dem Aufbringen der Elektroden 7, 8 entsteht die leitende Verbindung dieser Elektroden mit dem Lot der Anschlüsse 14, 15.

Figur 1 zeigt noch, daß in einer weiteren Bohrung 10 in der Basisscheibe 2 ein Thermowiderstand 20, z.B. ein PT 100, untergebracht ist. Die von diesem Widerstand gelieferten Signale werden ebenfalls der nicht dargestellten Meßschaltung zugeführt, so daß Temperatur-Instabilitäten kompensiert werden können.

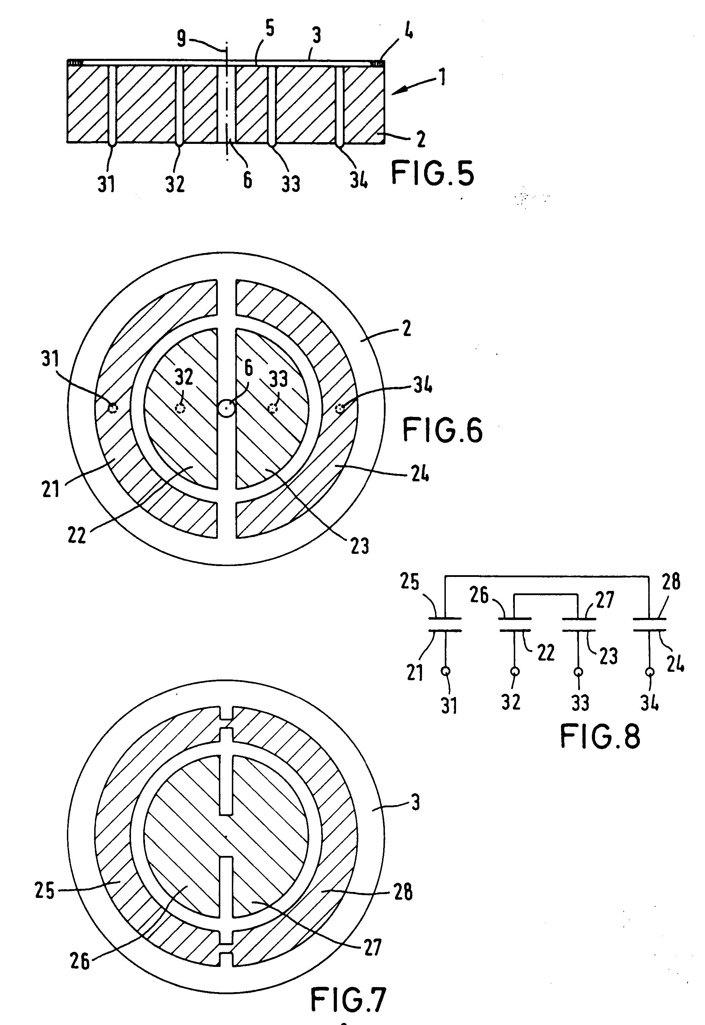

Beim Ausführungsbeispiel nach den Figuren 5 bis 8 trägt die Basisscheibe 2 insgesamt vier Elektroden 21 bis 24. Zusammen mit den paarweise elektrisch miteinander verbundenen Elektroden 25 bis 28 auf der Membran 3 bilden die Elektroden 21 bis 24 je zwei in Reihe geschaltete Kondensatoren (vgl. Figur 8). Jede der vier Elektroden 21 bis 24 der Basisscheibe 2 ist mit einem Anschluß 31 bis 34 ausgerüstet, die so ausgebildet sind, wie sie zum Ausführungsbeispiel nach den Figuren 1 bis 4 beschrieben wurden. Auch bei diesem Ausführungsbeispiel besteht der Vorteil, daß die Elektroden 25 bis 28 auf der Membran 3 nicht mit Anschlußleitungen ausgerüstet werden müssen.

Die Elektroden auf der Basisscheibe 2 und die dazu korrespondierenden Elektroden auf der Membran 3 sind halbmondförmig (Elektroden 22, 23, 26, 27) bzw. halbringförmig (Elektroden 21, 24, 25, 28) ausgebildet. Die zentralen Elektroden 22, 23, 26, 27 dienen der Meßwerterfassung, da die Kapazität der von diesen Elektroden gebildeten Kondensatoren sich mit der Auslenkung der Membran 3 maßgeblich verändert. Die halbringförmigen Elektroden 21, 24, 25, 28 befinden sich im Randbereich des Sensors 1. Die Kapazität der von diesen Elektroden gebildeten Kondensatoren wird von der Bewegung der Membran nur wenig beeinflußt. Diese Kondesatoren werden deshalb in an sich bekannter Weise zur Temperaturkompensation herangezogen.

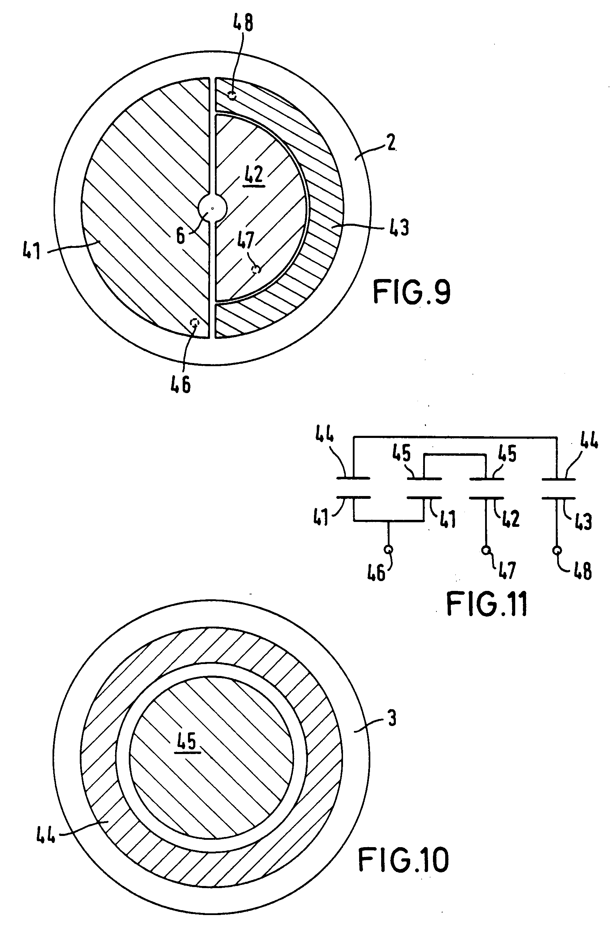

Die Figuren 9 und 10 zeigen modifizierte Schichtabschnitte 41, 42, 43 auf der Basisscheibe 2 und 44, 45 auf der Membran 3. Die halbkreisförmige Elektrode 41 entspricht elektrisch miteinander verbundenen Elektroden 21, 22 nach Figur 6, so daß nur ein Anschluß 46 erforderlich ist. Die Elektroden 42, 43 entsprechen den Elektroden 23, 24 nach Figur 6. Die Elektroden 44, 45 sind praktisch mit den Elektroden 25 bis 28 (Figur 7) identisch. Auch diese Elektroden bzw. Schichtabschnitte 41 bis 45 bilden zwei Paare von in Reihe geschalteten Kondensatoren (Fig. 11), ohne daß eine Kontaktierung der Membran 3 erforderlich ist. Die Basisscheibe 2 ist mit den drei Anschlüssen 46, 47, 48 ausgerüstet.

## Patentansprüche

1. Sensor für ein Kapazitäts-Manometer mit zwei Scheiben (2, 3) aus elektrisch isolierendem Material, die in ihren Randbereichen miteinander verbunden sind, deren Innenseiten mit metallischen, Kondensator-Elektroden bildenden Schichtabschnitten ausgerüstet sind und von denen eine (3) als Membran und die andere (2) als Basis ausgebildet ist, wobei auf der Innenseite der Basisscheibe (2) mindestens zwei separate metallische Schichtabschnitte (7, 8; 21 bis 24; 41 bis 43) vorhanden sind, die mit elektrisch miteinander verbundenen metallischen Schichtabschnitten (11, 12; 25 bis 28; 44, 45) auf der Membran (3) mindestens zwei in Reihe geschaltete Kapazitäten bilden, dadurch gekennzeichnet, daß nur die auf der Innenseite der Basisscheibe (2) befindlichen metallischen Schichtabschnitte (7, 8; 21 bis 24; 41 bis 43) mit nach außen führenden Anschlüssen (14, 15; 31 bis 34; 46 bis 48) ausgerüstet sind.

2. Sensor nach Anspruch 1, dadurch gekennzeichnet, daß je vier Schichtabschnitte (21 bis 24 bzw. 25 bis 28) auf der Basisscheibe (2) bzw. der Membran (3) vorgesehen sind, welche zwei Paare von in Reihe geschalteten Kapazitäten bilden, deren Anschlüsse (31 bis 34) an der Basisscheibe (2) vorgesehen sind.

3. Sensor nach Anspruch 2,dadurch gekennzeichnet, daß elektrisch miteinander verbundenen Elektroden (21, 22; 25, 28; 26, 27) zu einheitlichen Schichtabschnitten (41, 44, 45) zusammengefaßt sind.

4. Sensor nach einem der Ansprüche 1, 2 oder 3, dadurch gekennzeichnet, daß die Elektroden halbkreis- bzw. halbringförmig gestaltet sind.

5. Sensor nach Anspruch 3, dadurch gekennzeichnet, daß zu einem Schichtabschnitt zusammengefaßte Elektroden (44 bzw. 45) auf der Membran (3) kreisring- bzw. kreisförmig ausgebildet sind.

6. Sensor nach einem der vorhergehenden Ansprüche, dadurch gekennzeichnet, daß der Basisscheibe 2 ein Thermowiderstand (20) zugeordnet ist.

7. Sensor nach einem der vorhergehenden Ansprüche, dadurch gekennzeichnet, daß zur Bildung der Anschlüsse (14, 15, 31 bis 34, 46 bis 48) Bohrungen (18, 19) vorhanden sind, die die Basisscheibe (2) durchsetzen und mit einem Lot gefüllt sind.

## Claims

1. Sensor for a capacitive manometer with two discs (2, 3) made of electrically insulating material which are connected to one another in their peripheral regions, the inner sides of which are provided with metallic layer sections forming capacitor electrodes, one (3) of which is designed as a membrane and the other (2) as a base, whereby at least two separate metallic layer sections (7, 8; 21 to 24; 41 to 43) are present on the inside of the base disc (2) which with metallic layer sections (11, 12; 25 to 28; 44, 45) on the membrane (3) form at least two capacitors connected in series, characterised in that only the metallic layer sections (7, 8; 21 to 24; 41 to 43) located on the inside of the base disc (2) are provided with connections (14, 15; 31 to 34; 46 to 48) leading outwards.

2. Sensor according to Claim 1, characterised in that four layer sections (21 to 24 or 25 to 28) are provided in each case on the base disc (2) and on the membrane (3) respectively which form two pairs of capacitors connected in series, the connections of which (31 to 34) are provided on the base disc (2) .

3. Sensor according to Claim 2, characterised in that electrodes (21, 22; 25, 28; 26, 27) which are connected electrically to one another are combined to form integral layer sections (41, 44, 45).

4. Sensor according to one of Claims 1, 2 or 3, characterised in that the electrodes are designed to be semicircular or semi-annular.

5. Sensor according to Claim 3, characterised in that electrodes (44 or 45) on the membrane (3) which are combined to form a layer section are designed to be annular or circular.

6. Sensor according to one of the preceding claims, characterised in that a thermal resistor (20) is assigned to the base disc (2).

7. Sensor according to one of the preceding claims, characterised in that with a view to forming the connections (14, 15, 31 to 34, 46 to 48) bores (18, 19) are present which pass through the base disc (2) and are filled with a solder.

## Revendications

1. Capteur pour un manomètre capacitif comportant deux disques (2, 3) en matériau isolant électriquement, qui sont reliés l'une avec l'autre dans leurs régions de bord, dont les côtés intérieur sont équipés avec des sections de couche métallique, formant des électrodes de condensateur, et desquelles, l'une (3) est configurée comme membrane et l'autre (2) est configurée comme base, au moins deux sections de couche (7, 8 ; 21 à 24 ; 41 à 43) métalliques, séparées, étant présentes sur le côté intérieur du disque de base (2), qui, avec des sections de couche (11, 12 ; 25 à 28 ; 44, 45) métalliques, reliées les unes avec les autres électriquement, sur la membrane (3), forment au moins deux capacités mises en circuit en série, caractérisé en ce, que seulement les sections de couche (7, 8 ; 21 à 24 ; 41 à 43) métalliques, se trouvant sur le côté intérieur du disque de base (2), sont équipées avec des raccordements (14, 15 ; 31 à 34 ; 46 à 48) conduisant vers l'extérieur.

2. Capteur selon la revendication 1, caractérisé en ce, que, chaque fois, quatre sections de couche (21 à 24 ou bien 25 à 28) sont prévues sur le disque de base (2) ou bien la membrane (3), lesquelles forment deux paires de capacités mises en circuit en série, dont les raccordements (31 à 34) sont prévus au disque de base (2).

3. Capteur selon la revendication 2, caractérisé en ce, que, des électrodes (21, 22 ; 25, 28 ; 26, 27), reliées les unes avec les autres électriquement, sont réunies en des sections de couche (41, 44, 45) unitaires.

4. Capteur selon une des revendications 1, 2 ou 3, caractérisé en ce, que les électrodes sont configurées en forme de demi-cercle ou bien de demi-anneau.

5. Capteur selon la revendication 3, caractérisé en ce, que des électrodes (44 ou bien 45), réunies en une section de couche sur la membrane (3), sont constituées en forme d'anneau circulaire ou bien en forme de cercle.

6. Capteur selon une des précédentes revendications, caractérisé en ce, qu'au disque de base (2) est associée une thermorésistance (20).

7. Capteur selon une des précédentes revendications, caractérisé en ce, que, pour la formation des raccordements (14, 15, 31 à 34, 46 à 48), des perçages (18, 19) sont présents, qui traversent le disque de base (2) et sont remplis avec un métal d'apport de brasage.
